# EUROPEAN PATENT APPLICATION

(11) **EP 1 101 659 A2**
(43) Date of publication of application: **23.05.2001**
(21) Application number: 00308992.7
(22) Date of filing: 12.10.2000
(51) Int. Cl.: B60R 21/09

(54) **Vehicle control pedal**

(30) Priority: 20.11.1999 GB 9927428
(71) Applicant: DRAFTEX INDUSTRIES LIMITED, Edinburgh EH2 3AP, Scotland (GB)
(72) Inventor: Cospin, Sylvain, 08300 Novy Chevrieres (FR)
(74) Representative: Foster, David Martyn

(57) **Abstract**

A control pedal for a vehicle such as a brake pedal comprising an upper member (6) and a lower member (9) hingedly coupled together and forming an arm of the pedal, and a foot plate (10) located at a first end of the arm, the distal end of the arm being arranged for pivotal mounting on a vehicle and the hinged coupling between the two members permitting additional movement of the lower member (6) relative to the upper member (9) in the operating direction of the pedal, the lower member (9) including a fixing point (30) for fixing to a part of the vehicle (34) which moves generally away from a driver during a collision, whereby in use, the lower member (9) is pulled away from the feet of the driver during a collision.

## Description

This invention relates to a control pedal for a vehicle.

Various methods have been used to reduce injury caused by control pedals to the driver of a vehicle in the case of an accident.

GB 2322836 shows a control pedal comprising upper and lower members hingedly coupled together, the hinged coupling permitting additional movement of the lower member relative to the upper member in the operating direction. This arrangement may limit the force exerted on the foot of the driver, but requires a sufficient force to be exerted by the driver's foot to move the lower member further than the upper member.

EP 0904990 shows a control mechanism comprising the combination of a foot pedal and a control linkage for coupling to a vehicle mechanism and for applying force to the vehicle mechanism, whereby the control pedal is moved away from the driver's foot in the case of an accident by means of destructive deformation of the vehicle mechanism.

The invention aims to provide an improved arrangement.

According to the invention, there is provided a control pedal for a vehicle such as a brake pedal comprising an upper member and a lower member hingedly coupled together and forming an arm of the pedal, and a foot plate located at a first end of the arm, the distal end of the arm being arranged for pivotal mounting on a vehicle and the hinged coupling between the two members permitting additional movement of the lower member relative to the upper member in the operating direction of the pedal, characterised in that the lower member includes a fixing point for fixing to a part of the vehicle which moves generally away from a driver during a collision, whereby in use, the lower member is pulled away from the feet of the driver during a collision.

According to a second aspect of the invention, there is provided a control mechanism comprising the combination of a foot pedal and a control linkage for coupling to a vehicle mechanism such as a brake servo and for applying force to the vehicle mechanism, the combination being arranged to deform in use when a force is applied in the operating direction which exceeds a predetermined threshold, characterised in that the combination includes a fixing point for fixing to a part of the vehicle which moves away from a driver during a crash, the said applied force being applied via the fixing point.

Embodiments of pedals in accordance with the invention will now be described by way of example with reference to the drawings in which:
Figure 1 is a perspective view of a prior art metal pedal;
Figure 2 is a schematic side elevation of the pedal in accordance with the invention;
Figure 3 is a schematic side elevation of an alternative pedal in accordance with the invention; and
Figure 4 is a schematic side elevation of a further alternative pedal in accordance with the invention.

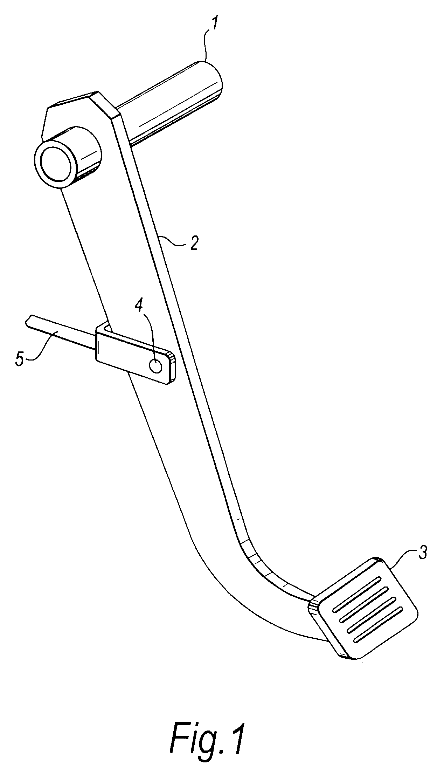

The prior art pedal of Figure 1 has a pivot tube 1 located at one end of a main arm 2. At the other end of the main arm 2 is a foot plate 3. The pedal is mounted to a vehicle by the pivot tube 1 and is caused to move about the pivot tube 1 by force applied to the foot plate 3. A control linkage 5 is pivotally mounted at point 4 partway along the main arm 2. Force applied to the foot plate 3 is multiplied by the lever arrangement formed by the main arm 2 and the relative locations of the pivot point 4 and pivot tube 1, and is transmitted to a mechanism to be controlled such as a brake servo or clutch mechanism via the control linkage 5.

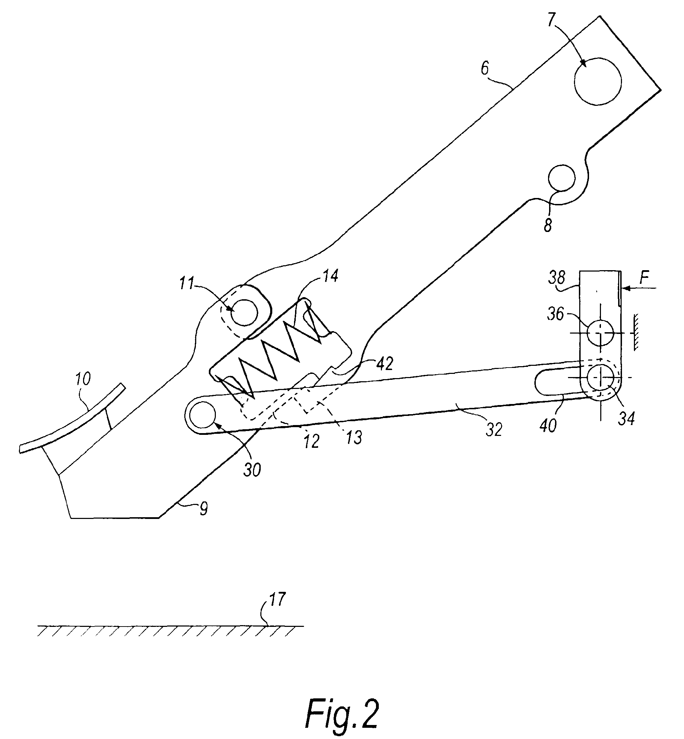

With reference to Figure 2, an upper pedal arm 6 is rotatably connected to the vehicle body about point 7. The upper arm 6 also includes a hinge point 8 for the connection of a control linkage to transmit force to a mechanism such as a brake servo.

A lower arm 9 has a foot plate 10 which is formed at the lower part of the lower arm 9. The lower arm 9 is hingedly connected to the upper arm 6 by an axle 11. A further connection between the upper and lower arms 6 and 9 is made by co-operating hooks 13 and 12 on the upper and lower arms respectively.

The hooks 12 and 13 permit rotation of the lower arm 9 about the axle 11 generally in the direction A. They prevent such rotation in the opposite direction.

A compression spring 14 is located on lugs 15 and 16 formed respectively on the upper and lower arms 6 and 9. The compression spring acts against the hooks 12 and 13 and acts to rotate the lower arm 9 in the opposite direction to arrow A.

The compression spring 14 is precompressed so that the upper and lower arms 6 and 9 are held generally in the position shown in Figure 2. Thus until the precompression of the spring 14 is overcome, the pedal acts in a generally conventional way and transmits effort applied to the foot plate 10 to a control linkage connected to the pivot point 8.

When excess force is applied to the foot plate 10, the lower arm 9 is allowed to pivot about axle 1 and eventually comes into contact with a part of the vehicle body 17.

It will be appreciated that the compression spring 14 may be replaced by any generally resilient compressible material or biasing means. Typical examples are a leaf spring, a gas spring, a torsion spring, a tension spring, a torsion bar or elastomeric washers.

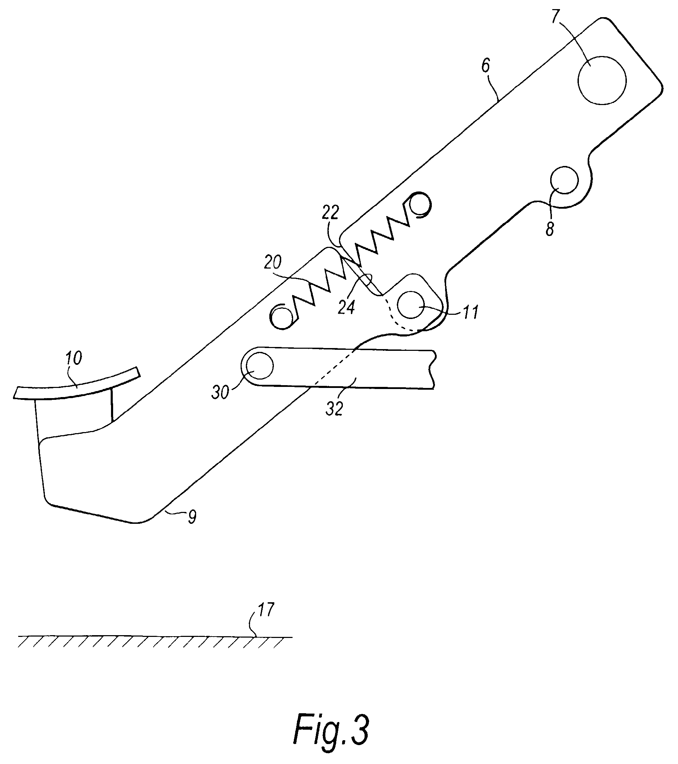

Figure 3 shows an alternative arrangement for the pedal in which a tension spring 20 is used. In this case, it is not necessary to have inter-engaging hooks 12 and 13 since the spring does not need to be held in compression. Instead, the spring is pretensioned and is held in this state by abutting surfaces 22 and 24 on the upper and lower arms 6 and 9 respectively.

Referring also to Figure 2, the lower member 9 includes a fixing point 30 for fixing to the vehicle body. Preferably, the fixing point 30 is fixed to the vehicle body by an arm 32 which is fixed to a point 34 on the vehicle body which is moved generally away from the driver in the event of a collision.

Movement of the point 34 may be achieved generally in the way shown in Figure 2 by providing a pivot 36 and a lever 38. The pivot 36 is fixed to a part of the vehicle body which does not move during a collision and the end of the lever 38 is subjected to movement during a force F applied during a collision. In this way, the lever 38 is caused to pivot and draw the point 34 generally away from the driver which in turn moves the lower member 9 away from the driver, thus reducing the chance of the driver's feet being injured.

The arm 32 includes an elongate slot 40 which permits normal operation of the pedal prior to a collision.

A detent or other similar acting formation 42 may be formed on one of the hooks 12 and 13 to latch the lower member in its downwardly deflected position. This provides maximum space in the event of a collision.

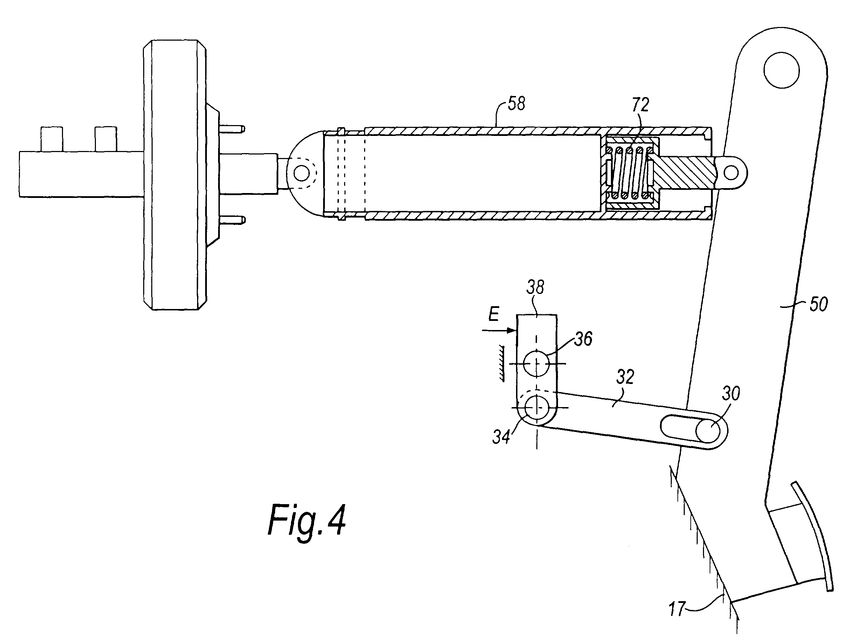

Figure 4 shows the application of the type of system shown in Figure 2 to the combination of a linkage 58 and a pedal 50. The linkage 58 is compressible and the figure shows a spring 72 in its compressed state and the pedal 50 in contact with the part of the vehicle 17.

## Claims

1. A control pedal for a vehicle such as a brake pedal comprising an upper member (6) and a lower member (9) hingedly coupled together and forming an arm of the pedal, and a foot plate (10) located at a first end of the arm, the distal end of the arm being arranged for pivotal mounting on a vehicle and the hinged coupling between the two members permitting additional movement of the lower member (9) relative to the upper member (6) in the operating direction of the pedal, characterised in that the lower member (9) includes a fixing point (30) for fixing to a part of the vehicle (34) which moves generally away from a driver during a collision, whereby in use, the lower member (9) is pulled away from the feet of the driver during a collision.

2. A control pedal according to claim 1, characterised in that the pedal further includes biasing means (14, 20) arranged to restrict the additional movement when a force applied to the foot pedal is below a predetermined threshold whereby when a force is applied to the foot pedal which is above the predetermined threshold, the lower member (9) comes into contact with a fixed part of the vehicle body (17) and further movement in the operating direction of the pedal is prevented.

3. A control pedal according to claim 1 or claim 2, characterised in that the biasing means is a compression spring (14) and that the upper (6) and lower (9) members include co-operating formations (12,13) which restrain movement of the lower member (9) relative to the upper member (6) in a direction opposite to the operating direction of the pedal.

4. A control pedal according to any preceding claim, characterised in that the cooperating formations (12,13) are arranged to hold the lower member (9) in position once a predetermined position relative to the upper member (6) has been reached during the additional movement.

5. A control pedal according to any preceding claim, characterised in that the biasing means is a tension spring (20) connected between upper (6) and lower (9) members.

6. A control pedal according to any preceding claim, characterised by the inclusion of a buffer for fixing to the vehicle body and arranged to receive the lower member (9) when the lower member (9) comes into contact with the vehicle body (17).

7. A control pedal according to claim 6, characterised in that the buffer includes guide formations extending generally away from the vehicle body (17) arranged to reduce lateral movement of the lower member (9) when this is in contact with the buffer.

8. A control pedal according to claim 6 or claim 7, characterised in that the buffer is adjustable to vary the point in the travel of the lower member (9) at which the lower member (9) comes into contact with the buffer.

9. A control pedal according to any preceding claim, characterised in that the biasing means (14,20) is selected from the group containing a block of elastomeric material, a gas spring, a torsion spring, a torsion bar and a leaf spring.

10. A control pedal according to any preceding claim, characterised in that the upper (6) and lower (9) members are hingedly connected by a flexible plastics material.

11. A control mechanism comprising the combination of a foot pedal (50) and a control linkage (58) for coupling to a vehicle mechanism such as a brake servo and for applying force to the vehicle mechanism, the combination being arranged to deform in use when a force is applied in the operating direction which exceeds a predetermined threshold, characterised in that the combination includes a fixing point (34) for fixing to a part of the vehicle which moves away from a driver during a crash, the said applied force being applied via the fixing point (30).
